# EUROPEAN PATENT APPLICATION

(11) **EP 4 597 246 A1**
(43) Date of publication of application: **06.08.2025**
(21) Application number: 23871432.3
(22) Date of filing: 31.07.2023
(51) Int. Cl.: G05B 23/02, B25J 19/04

(54) **FACTOR ANALYSIS DEVICE AND FACTOR ANALYSIS METHOD**

(30) Priority: 26.09.2022 JP 2022152641
(71) Applicant: KAWASAKI JUKOGYO KABUSHIKI KAISHA, Kobe-shi, Hyogo 650-8670 (JP)
(72) Inventor: TSUCHIYA, Hayato, Chuo-ku, Kobe-shi Hyogo 650-8670 (JP); IIDA, Masaomi, Chuo-ku, Kobe-shi Hyogo 650-8670 (JP); KAWAKAMI, Yoshihiro, Chuo-ku, Kobe-shi Hyogo 650-8670 (JP); TAMIYA, Tomoaki, Chuo-ku, Kobe-shi Hyogo 650-8670 (JP); SANO, Tomomi, Chuo-ku, Kobe-shi Hyogo 650-8670 (JP)
(74) Representative: Müller-Boré & Partner Patentanwälte PartG mbB
(86) International application number: PCT/JP2023/027896
(87) International publication number: WO 2024/070189

(57) **Abstract**

A factor analysis device (50) includes an input unit (51), a learning unit (52a), an analysis unit (52b), and a notification unit (52c). The input unit (51) receives sensor data obtained by measuring a work performed by a robot (11) with a sensor, and a determination result of a work stoppage or a work quality of a work corresponding to the sensor data. The learning unit (52a) constructs a estimation model by machine learning based on input data to the input unit (51a), with the sensor data as input data and an estimation result of the work stoppage or the work quality as output data. The analysis unit (52b) analyzes the input data and the output data of the estimation model to create the contribution data indicating the contribution degree that is a degree to which the sensor data contributes to an estimation of the work stoppage or the work quality. The notification unit (52c) notifies the contribution data created by the analysis unit (52b).

## Description

### Technical Field

The present application mainly relates to a factor analysis device that identifies a factor of inappropriate work performed by a work machine.

### Background Art

Patent Document 1 discloses an information processing device that causes a robot to grasp a target object. The information processing device determines a distribution of a probability of success or failure in grasping the target object based on visual information obtained by capturing an image of the target object. The information processing device estimates a current state based on the determination result of whether the grasping was success or not and the probability of success. For example, when the probability of success is sufficiently high, the information processing device determines that the grasping has failed due to a control factor related to the grasping.

### Citation List

### Patent Documents

Patent Document 1: JP 2019-188516 A

### Summary of the Invention

### Technical Problem

The failure factors that can be determined by the information processing device of Patent Document 1 are limited to failure factors that are assumed in advance and that can be clearly determined based on sensors or control commands. However, since there are many different failure factors, and various failure factors can occur depending on an environment, a situation may arise in which the information processing device of Patent Document 1 is unable to adequately identify the failure factor.

The present application has been made in consideration of the above circumstances, and a main object of this application is to provide a factor analysis device that accurately determines a factors that cause work performed by a work machine to be inappropriate.

### Solution to Problem

The problem to be solved by the present application is as described above. Next, the means for solving this problem and the effects thereof will be described.

According to a first aspect of the present application, there is provided a factor analysis device having the following configuration. That is, the factor analysis device includes an input unit, a learning unit, an analysis unit, and a notification unit. The input unit receives as input sensor data obtained by measuring work performed by a work machine with a sensor, and a determination result of work stoppage or work quality of the work corresponding to the sensor data. The learning unit uses machine learning to construct an estimation model based on the data input to the input unit, with the sensor data as input data and an estimated result of work stoppage or work quality as output data. The analysis unit analyzes the input data and the output data of the estimation model to create contribution data indicating a contribution degree that is a degree to which the sensor data contributes to an estimation of work stoppage or work quality. The notification unit notifies the contribution data created by the analysis unit.

According to a second aspect of the present application, there is provided a following factor analysis method as following. In the factor analysis method, sensor data obtained by measuring work performed by a work machine with a sensor and a determination result of work stoppage or work quality of the work corresponding to the sensor data are input. Based on the input data, an estimation model is constructed by machine learning, with the sensor data as input data and an estimated result of work stoppage or work quality as output data. The input data and the output data of the estimation model are analyzed to create contribution data indicating a contribution degree that is a degree to which the sensor data contributes to an estimation of work stoppage or work quality. The created contribution data is notified.

### Advantageous Effect of Invention

According to the present application, a factor that cause work performed by a work machine to be inappropriate can be identified with high accuracy.

### Brief Description of Drawings

FIG. 1 is a block diagram of an work system including a factor analysis device according to an embodiment of the present application.
FIG. 2 is a flowchart showing a factor estimating process for estimating a factor of work stoppage or deterioration in work quality.
FIG. 3 is an explanatory diagram showing how an estimation model is constructed from sensor data and a determination result and then evaluated.
FIG. 4 is a graph showing the contribution degrees of each type of sensor data.
FIG. 5 is a factor presentation image in which the contribution degree of each region is superimposed on a tool image captured by a camera.

### Description of Embodiments

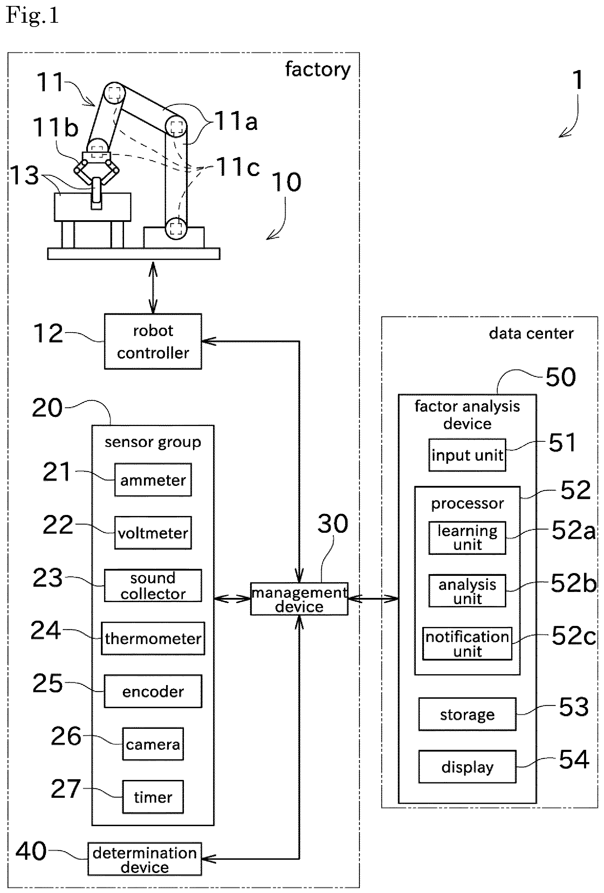

Next, an embodiment of the present application will be described with reference to the drawings. First, an overview of a work system 1 will be described with reference to FIG 1.

The work system 1 is a system that performs work using a work machine, analyzes the work, and presents factors that cause work stoppage or factors that cause work quality to deteriorate. Each device constituting the work system 1 will be described in detail below.

In this embodiment, an industrial robot is used as the work machine. The industrial robot is a robot that performs work in a workplace such as a factory or a warehouse. The industrial robot is of a teaching and playback type. The teaching and playback type is such that an operation of the industrial robot is taught in advance, and the industrial robot repeats the same operation according to the taught content. The industrial robot is, for example, a vertically articulated or horizontally articulated arm robot. The industrial robot may be a robot other than an arm robot, such as a parallel link robot. Tasks performed by the industrial robot is, for example, assembly, welding, painting, machining or transportation. Hereinafter, the industrial robot will be simply referred to as "robot 11."

The work machine is not limited to the industrial robot. For example, examples of other work machines include machine tools such as a laser processing machine or a machining center.

As shown in FIG. 1, the work system 1 of this embodiment is realized by various devices provided in a factory and a data center. The factory and the data center are connected via the Internet. This enables data to be transmitted and received between devices installed in the factory and devices installed in the data center. The network connecting the factory and the data center may be a wide area network other than the Internet. The factor analysis device 50 may be provided in the factory instead of in the data center. In this case, the factor analysis device 50 is connected to other devices via a local area network instead of the wide area network.

A factory is provided with a robot system 10, a sensor group 20, a management device 30, a determination device 40, and the factor analysis device 50. The robot system 10 includes a robot 11 and a robot controller 12.

The robot 11 includes a plurality of arms 11a rotatably connected to each other. A work tool 11b is attached to the tip of the arm 11a. The arms 11a can be individually operated by the power of actuators 11c respectively arranged therein. The work tool 11b performs work on the workpiece 13 by the power of the actuator 11c. When the work performed by the robot 11 is assembly or transportation, the work tool 11b is a hand that holds the workpiece 13.

The robot controller 12 is a computer including a processor such as a CPU, a primary storage such as a RAM, and a secondary storage such as a hard disk, an SSD, or a flash memory. The processor of the robot controller 12 reads out the program stored in the secondary storage into the primary storage and executes it, thereby controlling the robot 11 and causing the robot 11 to perform the work. Specifically, the storage of the robot controller 12 stores the teaching data. The robot controller 12 operates the arm 11a by sending a command to the actuator 11c based on the teaching data, and operates the work tool 11b by sending a command to the work tool 11b based on the teaching data.

The sensor group 20 is a collective term for a plurality of sensors that measure various information related to the work of the robot 11. The sensor group 20 includes an ammeter 21, a voltmeter 22, a sound collector 23, a thermometer 24, an encoder 25, a camera 26, and a timer 27. The sensors included in the sensor group 20 are just examples, and some of the sensors may be omitted or other sensors may be added depending on the work content of the robot 11 or the required accuracy of estimation, etc. The number of the above-mentioned sensors is not particularly limited. For example, two or more cameras 26 may be provided.

The ammeter 21 measures a current value supplied to the actuator 11c of the arm 11a or the work tool 11b. The voltmeter 22 measures a voltage value supplied to the actuator 11c of the arm 11a or the work tool 11b. The sound collector 23 measures working sounds generated while the robot 11 is working. The thermometer 24 measures a temperature of an environment in which the robot 11 is placed. The encoder 25 is provided for each joint of the arms 11a, and measures a rotation angle of each arm 11a. Thus, the encoder 25 measures an operation of the robot 11. The camera 26 photographs the robot 11 or the workpiece 13 to create an image. The timer 27 measures the time. Various data measured by each sensor of the sensor group 20 is associated with the time of measurement. In the following description, the data measured by each sensor of the sensor group 20 will be collectively referred to as sensor data.

The management device 30 and the determination device 40 are each a computer including a processor such as a CPU, a primary storage such as a RAM, a secondary storage such as a hard disk, an SSD, or flash memory, and a communication device. The processor can execute various processes by reading out a program stored in the secondary storage into the primary storage and executing it.

The management device 30 is connected to the robot controller 12, the sensor group 20, and the determination device 40 via wired or wireless connection. This enables the management device 30 to transmit the control contents of the robot controller 12 and the measurement results of the sensor group 20 to the determination device 40. The management device 30 can communicate with the factor analysis device 50 via the above-mentioned Internet. This enables the management device 30 to transmit the control contents of the robot controller 12, the measurement results of the sensor group 20, and the determination results of the determination device 40 to the factor analysis device 50. The management device 30 may process the received data and transmit it to the factor analysis device 50, or may transmit it to the factor analysis device 50 in its original format without processing it.

The determination device 40 determines whether or not a work stoppage has occurred based on the control contents of the robot controller 12 or the measurement results of the sensor group 20 received via the management device 30. The work stoppage occurs when the work of the robot 11 is stopped due to the occurrence of an abnormality. The work stoppage in this embodiment includes a short work stoppage of about a few seconds and a longer work stoppage. From another perspective, the work stoppage in this embodiment includes a temporary work stoppage that can recover on its own and a work stoppage that cannot recover on its own and therefore requires assistance from an operator. It is also possible to perform the processing of this embodiment by focusing only on work stoppages that are short-term and can recover on their own. The determination device 40 determines whether the robot 11 is working or not based on the control contents of the robot controller 12 or the measurement results of the sensor group 20, and determines that a work stoppage has occurred if work has stopped.

Alternatively, the determination device 40 may perform the determination of a work quality or in addition to the determination of a work stoppage. The work quality is the degree of quality of the work performed by the robot 11. The determination device 40 determines the work quality based on, for example, the speed of the work, the accuracy of the work, or the success rate of the work. The determination device 40 may determine the activity quality in two stages, such as good or bad, or may give a specific score indicating a level of the work quality.

The factor analysis device 50 is provided in the data center. The factor analysis device 50 analyzes the data received via the management device 30, identifies the factors of the work stoppage or poor work quality, and notifies the factors. The factor analysis device 50 is a server including an input unit 51, a processor 52, a storage 53, and a display 54. The factor analysis device 50 may be a single piece of hardware, or may be configured in such a way that a plurality of pieces of hardware are linked together. For example, the hardware that consolidates and stores information and the hardware that performs processing in response to information received from the management device 30 may be separate. The factor analysis device 50 may be realized by a cloud computing service.

The input unit 51 is a unit that communicates with the outside. Specifically, the input unit 51 is a wireless communication module or a wired communication module. The input unit 51 receives input of the control contents of the robot controller 12, the measurement results of the sensor group 20, or the estimation results of the determination device 40.

The processor 52 is a processing device such as a CPU, and can perform various processes by reading and executing programs stored in the storage 53. In the following, the processor 52 will be named a learning unit 52a, an analysis unit 52b, and a notification unit 52c according to the functions it performs. The processing performed by the processor 52 will be described in detail later.

The storage 53 includes a primary storage device such as a RAM, and a secondary storage device such as a hard disk, an SSD, or a flash memory. The storage 53 stores the programs executed by the processor 52, temporarily stores data required for executing the programs, and stores various data created by the processor 52.

The display 54 is, for example, a liquid crystal display or an organic EL display, and includes a screen capable of displaying information. Display 54 is capable of displaying images generated by processor 52. The display 54 is not an essential component and may be omitted.

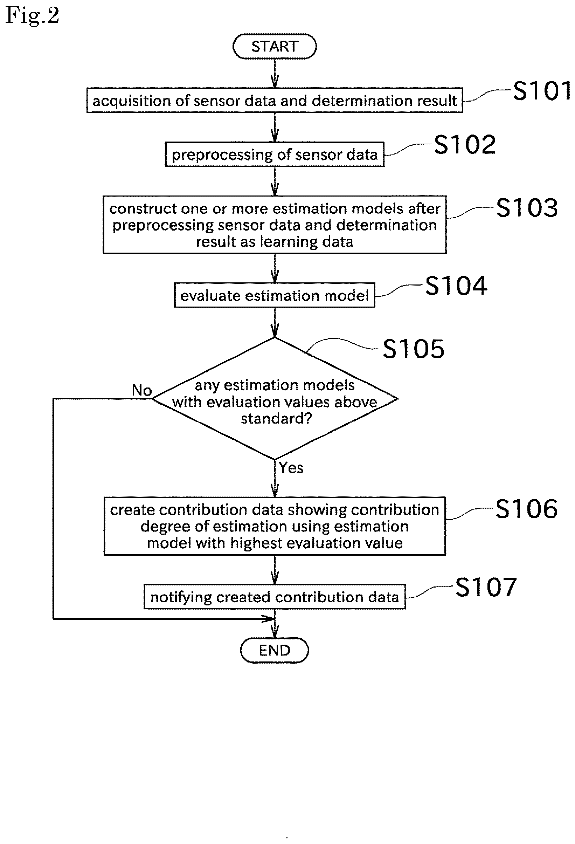

Next, a factor estimating process in which the factor analysis device 50 estimates the factors of the work stoppage or the deterioration of the work quality will be described. FIG. 2 is a flowchart of the factor estimating process. The factor estimating process is performed by the processor 52 of the factor analysis device 50. After the robot 11 finishes a task, the processor 52 performs a factor estimating process for the task. The processor 52 may perform the factor estimating process in parallel with the work of the robot 11.

First, the factor analysis device 50 acquires the sensor data and the determination result (S101). In detail, the sensor data is measured by the sensor group 20 and input to the input unit 51 of the factor analysis device 50 via the management device 30. The determination result is determined by the determination device 40 and input to the input unit 51 of the factor analysis device 50 via the management device 30.

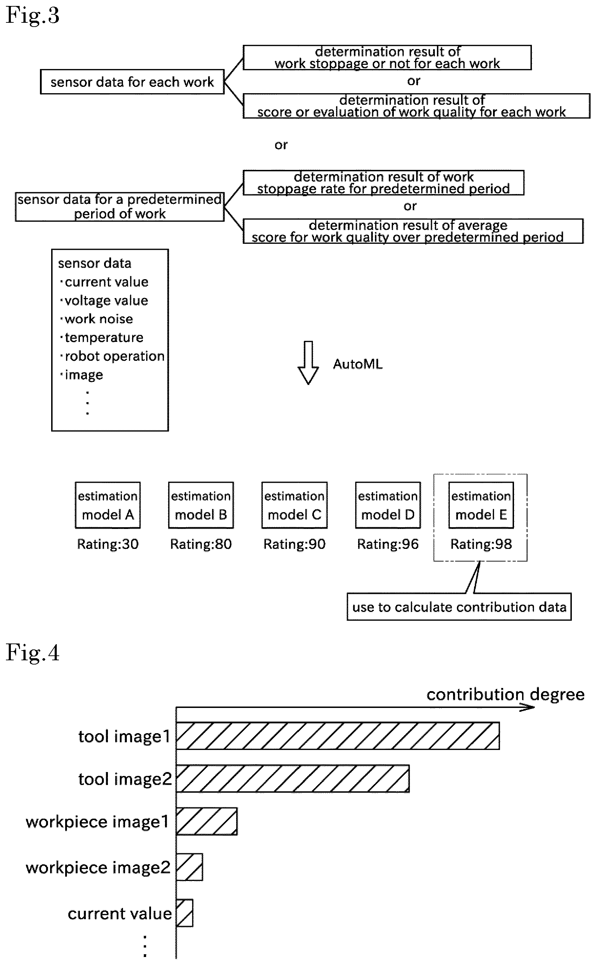

The upper part of FIG. 3 conceptually shows the sensor data and the determination results acquired by the factor analysis device 50. As shown in FIG. 3, the sensor data may be associated with each task, or may be associated with a predetermined period of time. The predetermined period of time is longer than one work time. Therefore, when the sensor data is associated with a predetermined period, the sensor data is associated with a plurality of tasks. As described above, the sensor data includes the current value, the voltage values, the work sound, the temperatures, the robot operations, the images, or the like.

The sensor data and the determination result are used together. Therefore, when the sensor data is associated with each work, the determination result is also associated with each work. This makes it possible to associate the sensor data measured during the Nth work with the Nth determination result. When the sensor data is associated with a predetermined period, the determination result is also associated with the predetermined period. In this case, the determination result is a work stoppage rate when determining the work stoppage, and is an average score of the work quality when determining the work quality. This makes it possible to associate sensor data of work performed during a specified period with the determination results for the same period. Instead of the average score of the work quality, a probability that the work quality is not good may be used.

Next, the processor 52 performs preprocessing of the sensor data (S102). Preprocessing of sensor data means processing the sensor data to appropriately construct an estimation model in the next step. The preprocessing is, for example, feature variable. That is, when a value that contributes to the work stoppage or the work quality is known from the sensor data, that value is extracted. For example, if it is known that the number of times the current value exceeds a threshold value is strongly related to the work stoppage, preprocessing is performed to convert the "current value" into the "number of times the current value exceeds the threshold value." The preprocessing may also be a process for reducing the types of sensor data. For example, if temperature is known not to be related to the work stoppages, then temperature is removed from the sensor data.

Alternatively, when factors of the work stoppage or the deterioration of the work quality are known to some extent, data related to the known event may be used as the feature variable. In contrast, if the cause of the work stoppage or the deterioration of the work quality is not known at all, the user cannot identify the feature variable. In this case, the process of step S102 may be omitted.

Next, the learning unit 52a of the processor 52 uses the preprocessed sensor data and the determination results as learning data to construct one or more estimation models (S103). The estimation model is a model in which sensor data is used as input data and a determination result is used as output data. The learning unit 52a performs machine learning to learn the sensor data and the determination result. Since the determination result corresponds to the correct answer, this machine learning is supervised learning. By performing supervised machine learning, the correlation between the numerical trends of the sensor data and the determination result can be identified, making it possible to construct the model that outputs determination result based on the sensor data. Supervised machine learning is well known and will not be described further. If step S102 is omitted, it is preferable that the learning unit 52a constructs the estimation model by performing deep learning. This is because the deep learning involves processing that includes the selection of feature variables, so even if the user does not select the feature variables, appropriate feature variables are selected and the estimation model is constructed.

The learning unit 52a constructs at least one estimation model. When constructing multiple estimation models, it is preferable to use AutoML. AutoML is an abbreviation for Automated Machine Learning, and is a technology that automates part of the machine learning design and model building process. Since AutoML itself is publicly known, a detailed description thereof will be omitted. Using AutoML makes it easy to build a model. This allows multiple estimation models to be constructed in a short time with little effort. AutoML has a function for automatically selecting input data, making it possible to select specific sensor data from multiple types of sensor data and construct a model that has learned from the selected sensor data. This makes it possible to construct multiple estimation models that combine various types of sensor data.

Next, the learning unit 52a of the processor 52 evaluates the estimation model constructed in step S103 (S104). The learning unit 52a inputs sensor data to the estimation model, and compares the estimation result output by the estimation model with the determination result determined by the determination device 40 during actual work. By repeating this process, the accuracy of the estimation model can be evaluated. For example, in the case where an alternative estimation result is output, such as the work stoppage or not, the more times the estimation result matches the determination result, the higher the evaluation of the estimation model. When the estimation result is output as a numerical value, such as a score for the work quality, the closer the estimation result is to the determination result, the higher the evaluation of the estimation model. FIG. 3 shows estimation models A to E each having an evaluation value, with estimation model E having the highest evaluation value.

Next, the processor 52 determines whether or not there is an estimation model whose evaluation value is equal to or greater than a reference value (S105). If there is no estimation model with an evaluation value equal to or higher than the reference value, the processor 52 ends the factor estimating process. This is because the estimation model with a low evaluation value cannot accurately estimate the factor of the work stoppage or the deterioration of the work quality.

If there is an estimation model with an evaluation value equal to or higher than the reference value, the analysis unit 52b of the processor 52 creates contribution data indicating a contribution degree of the specified sensor data to the estimation using the estimation model with the highest evaluation value (S106).

The contribution degree is a degree to which the sensor data contributes to the estimation of the work stoppage or the deterioration of the work quality. Sensor data with a high contribution degree contributes greatly to the estimation of the work stoppage or the deterioration of the work quality. In other words, the sensor data with the high contribution degree includes events or conditions related to the work stoppage or the deterioration of the work quality. The contribution data can be broadly classified into two types. The first contribution data is data indicating which type of sensor data, among multiple types of sensor data, contributes significantly to the estimation. In other words, it is data that indicates which type of sensor data has a greater contribution degree. For example, the first contribution data is data indicating that the temperature contributes more to the estimation than the current value. The second type of contribution data is data indicating which value or which range of the sensor data of the same type contributes significantly to the estimation. In other words, the contribution data is data that indicates which part of one sensor data has a large contribution degree. For example, the second contribution data is data indicating that a specific region of an image contributes significantly to the estimation.

The contribution degree can be calculated, for example, based on the change in estimation accuracy when the value of the target sensor data is changed. For the estimation model that uses multiple types of sensor data as input data, the analysis unit 52b replaces the value of the first type of sensor data with another value and inputs it to the estimation model, and compares the estimation result output by the estimation model with the actual determination result. Next, the analysis unit 52b performs the same process on all other types of sensor data one by one. The analysis unit 52b compares the degree of deterioration in the accuracy of the estimation results. The above-mentioned evaluation value can be used to compare the accuracy of the estimation results. The analysis unit 52b estimates that the higher the degree of deterioration in the accuracy of the estimation result, the higher the contribution degree of that sensor data. It should be noted that the contribution degree of each type of sensor data may be estimated by performing another process different from that described above. For example, the contribution degree can be calculated based on the SHAP value of each sensor data.

FIG. 4 shows a graph in which the contribution degree of each type of sensor data is calculated. A tool image 1 is an image obtained by photographing the work tool 11b at a first angle. A tool image 2 is an image obtained by photographing the work tool 11b at a second angle. From this graph, it can be seen that tool image 1 has the highest contribution degree. Therefore, it can be seen that the information displayed in tool image 1 is highly correlated with the work stoppage or the deterioration of the work quality. Therefore, by checking the tool image 1, the user can identify the factor of the work stoppage or the deterioration of the work quality. By improving the factor of these problems, the frequency of the work stoppage or the deterioration of the work quality can be reduced.

Since an image as sensor data contain various information, it may not be possible to identify the factor of the work stoppage or the deterioration of the work quality simply by identifying the image. Therefore, the analysis unit 52b may identify which areas of the image contribute to the work stoppage or the deterioration the work quality. The process of identifying the parts of the image that have a high contribution degree is basically the same as the process of identifying the sensor data that has a high contribution degree described above. That is, a portion of the image is modified by changing the RGB values or brightness of the portion, or by replacing it with an image acquired at a different time, and the degree of degradation in the estimation accuracy at that time is calculated and compared with the degree of degradation in another area. This makes it possible to calculate the contribution degree of each region of the image.

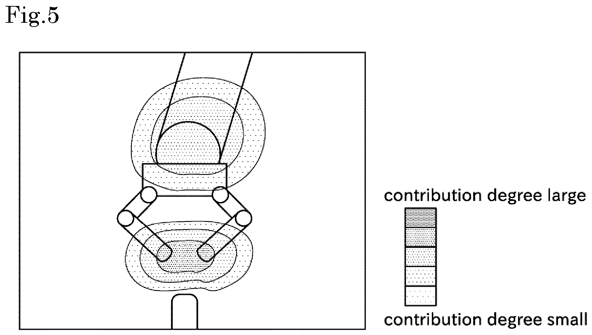

FIG. 5 shows an image in which information indicating the contribution degree of each region is superimposed on the tool image. By referring to FIG. 5, it is possible to confirm which part of the tool image contributes to the work stoppage or the deterioration of the work quality, so that the factor of the work stoppage or the deterioration of the work quality can be identified with high accuracy.

Next, the notification unit 52c of the processor 52 notifies the user of the contribution data created by the analysis unit 52b (S107). In this embodiment, the notification unit 52c notifies the user by displaying the contribution data in an image format as shown in FIG. 4 or FIG 5 on the display 54. The notification unit 52c may perform a process of transmitting the contribution data to a device owned by the user, instead of displaying the contribution data on the display 54 of the factor analysis device 50. The contribution data is not limited to an image format, but may be in a text format, for example. For example, the notification unit 52c may notify the sensor data of the type having the highest contribution degree in text format.

As described above, the factor analysis device 50 of this embodiment includes the input unit 51, the learning unit 52a, the analysis unit 52b, and the notification unit 52c. The input unit 51 receives sensor data obtained by measuring the work performed by the robot 11 with the sensor, and the determination result of the work stoppage or the work quality of the work corresponding to the sensor data. The learning unit 52a constructs the estimation model by machine learning based on the input data to input unit 51a, with the sensor data as input data and the estimation result of the work stoppage or the work quality as output data. The analysis unit 52b analyzes the input data and the output data of the estimation model to create the contribution data indicating the contribution degree that is a degree to which the sensor data contributes to an estimation of the work stoppage or the work quality. The notification unit 52c notifies the contribution data created by the analysis unit 52b. The above technical content is Feature 1.

The contribution data indicates the factor of the robot 11 of the work stoppage or the deterioration of the work quality. Therefore, by checking the contribution data, the user can accurately identify the factors that cause the robot 11 to perform inappropriate work. Factors that the user has not anticipated can also be identified if they are included in the sensor data.

In the factor analysis device 50 of this embodiment, the learning unit 52a constructs a plurality of estimation models. The analysis unit 52b selects one estimation model having the highest estimation accuracy from the multiple estimation models, and creates contribution data using the selected estimation model. The above technical content is Feature 2.

This makes it possible to generate contribution data using the estimation model with high estimation accuracy. As a result, it is possible to present to the user contribution data that clearly indicates the factor of the robot 11 of the work stoppage or the deterioration of the work quality.

In the factor analysis device 50 of this embodiment, the learning unit 52a constructs a plurality of estimation models using AutoML. The above technical content is Feature 3.

This makes it possible to construct multiple estimation models with simple processing.

In the factor analysis device 50 of this embodiment, the sensor includes the camera 26. The sensor data includes tool image 1. The analysis unit 52b identifies the contribution degree for each area of the tool image 1, and creates the factor presentation image in which the contribution degree is superimposed on the tool image as contribution data. The notification unit 52c outputs the factor presentation image to the display 54. The above technical content is Feature 4.

This allows the user to grasp at a glance the areas related to the cause of the robot 11 of the work stoppage or the deterioration of the work quality.

In the factor analysis device 50 of this embodiment, the sensor data includes at least first sensor data and second sensor data. One of the multiple types of sensor data described in this embodiment is the first sensor data, and any one of the remaining types is the second sensor data. The analysis unit 52b creates the contribution data indicating the contribution degree of the first sensor data and the contribution degree of the second sensor data. The above technical content is Feature 5.

This allows the user to easily understand which sensor data among the multiple types of sensor data is related to the factor of the robot 11 of the work stoppage or the deterioration of the work quality.

In the factor analysis device 50 of this embodiment, the learning unit 52a constructs an estimation model using sensor data from which feature variable have not been extracted as input data. The above technical content is Feature 6.

This eliminates the need for the user to perform processing to extract feature variable, thereby reducing the burden on the user. This embodiment is particularly effective because the cause of the work stoppage or quality deterioration is unknown, and therefore it is highly likely that extraction of feature variable is difficult.

The above-mentioned features 1 to 6 can be appropriately combined as long as no contradiction occurs. For example, feature N (N=1, 2, ... , 6) can be appropriately combined with at least one of features 1 to N-1.

Although the preferred embodiment of the present application has been described above, the above configuration can be modified, for example, as follows.

The flowcharts shown in the above embodiment are merely examples, and some processes may be omitted, the contents of some processes may be changed, or new processes may be added. For example, in a situation where the accuracy of the estimation model is considered to be high, the process of evaluating the estimation model, specifically, steps S104 and S105, may be omitted. **In** the flowchart of FIG. 4, when the evaluation value of the estimation model is less than the reference value, the factor estimating process ends. Alternatively, if the evaluation value of the estimation model is less than the reference value, the process may return to step S103 and the process of constructing the estimation model may be executed again. **In** this case, it is preferable to change the conditions, parameters, etc. when constructing the estimation model.
he functionality of the elements disclosed herein may be implemented using circuitry or processing circuitry which includes general purpose processors, special purpose processors, integrated circuits, ASICs (Application Specific Integrated Circuits), conventional circuitry and/or combinations thereof which are configured or programmed to perform the disclosed functionality. Processors are considered as processing circuitry or circuitry as they include transistors and other circuitry therein. In the disclosure, the circuitry, units, or means are hardware that carry out the recited functionality, or are hardware programmed to perform the recited functionality. The hardware may be any hardware disclosed herein or otherwise may be other known hardware which is programmed or configured to carry out the recited functionality. When the hardware is a processor which may be considered as a type of circuitry, the circuitry, means, or units are a combination of hardware and software, the software being used to configure the hardware and/or processor.

## Claims

1. A factor analysis device comprising:
an input unit that is input sensor data obtained by measuring work performed by a work machine with a sensor, and a determination result of a work stoppage or a work quality of the work corresponding to the sensor data;
a learning unit that uses machine learning to construct an estimation model based on data input to the input unit, with the sensor data as input data and an estimation result of the work stoppage or the work quality as output data;
an analysis unit that analyzes the input data and the output data of the estimation model to create contribution data indicating a contribution degree that is a degree to which the sensor data contributes to an estimation of the work stoppage or the work quality; and
a notification unit notifies the contribution data created by the analysis unit.

2. The factor analysis device according to claim 1, wherein
the learning unit constructs a plurality of the estimation models, and
the analysis unit selects one estimation model having a highest estimation accuracy from the plurality of estimation models, and creates the contribution data using the selected estimation model.

3. The factor analysis device according to claim 2, wherein
the learning unit uses AutoML to construct the plurality of the estimation models.

4. The factor analysis device according to claim 1, wherein
the sensor includes a camera,
the sensor data includes an image,
the analysis unit identifies the contribution degree for each area of the image, and creates a factor presentation image as the contribution data in which the contribution degree is superimposed on the image, and
the notification unit outputs the factor presentation image to the display.

5. The factor analysis device according to claim 1, wherein
the sensor data includes at least first sensor data and second sensor data, and
the analysis unit creates the contribution data indicating the contribution degree of the first sensor data and the contribution degree of the second sensor data.

6. The factor analysis device according to claim 1, wherein
the learning unit constructs the estimation model using sensor data from which feature variable have not been extracted as input data.

7. A factor analysis method, comprising:
inputting sensor data obtained by measuring work performed by a work machine with a sensor, and a determination result of a work stoppage or a work quality of the work corresponding to the sensor data;
constructing an estimation model based on the input data by machine learning with the sensor data as input data and an estimation result of the work stoppage or the work quality as output data;
analyzing the input data and the output data of the estimation model to create contribution data indicating a contribution degree that is a degree to which the sensor data contributes to an estimation of the work stoppage or the work quality; and
notifying the created contribution data.
